# EUROPEAN PATENT SPECIFICATION

(11) **EP 1 064 499 B1**
(45) Date of publication and mention of the grant of the patent: **20.04.2005**
(21) Application number: 98933989.0
(22) Date of filing: 08.06.1998
(51) Int. Cl.: F23J 15/00, F23J 15/06, B01D 47/06

(54) **DEHUMIDIFIER FOR FLUE GASES**
ENTFEUCHTER FÜR ABGASE
DESHUMIDIFICATEUR DE GAZ DE FUMEES

(43) Date of publication of application: 03.01.2001
(73) Proprietor: Erma, Eero, 147 41 Tumba (SE)
(72) Inventor: Erma, Eero, 147 41 Tumba (SE)
(86) International application number: PCT/SE1998/001081
(87) International publication number: WO 1999/067571

(56) References cited:
- EP-A- 0 810 407
- DE-A1- 3 737 500
- DE-A1- 4 425 738
- SE-C2- 508 773
- US-A- 3 619 985
- US-A- 5 368 096

## Description

Flue gases from combustion plants have water vapour from the combustion in the flue gas. With a condenser part of the vapour can be condensed and the condense heat be used to heat the return water from a heating system. By humidifying the combustion air with rest heat from the flue gas it is possible by using known technology to cool the flue gas to a temperature in the magnitude of 15 C under the return water temperature and recover still more heat energy. US 3,619,985 discloses such a system for dehumidification of flue gases, in which water is injected in the flue gas from a furnace through a spray chamber, the heated water is collected in a scrubber and pumped through a cooling system where ambient air cools the water in a heat exchanger. In the first stage of the scrubber water is sprayed in the combustion gases, thus cooling them. From the first stage of the scrubber, water is further cooled in a second heat exchanger with an air cooler, after which the resulting cooled water is again injected into the already cooled flue gas in the second stage of the scrubber. The water content of the flue gas is high even after the condensation, especially if the return water temperature is high. It is an advantage if the flue gas temperature can still more be cooled, because:
- The cleaning efficiency of dust particles from the gas improves when more condensation is arranged. Only changing their flow direction in some type of cleaning device cannot wash small particles away. The particles are so light that they follow the gas flow around the collector devices. The dust particles build in a condensing gas cores around which condense grows. The particles get consequently more weight and can be caught more easily. A better cleaning efficiency can therefore be reached with forceful condensation. It is an advantage for this reason to dehumidify the flue gas still more after the cooling to get heat recovery.
- The water vapour, which is left in the flue gas, builds a disturbing vapour plume, especially at cold weather. The plume is aesthetically disturbing and dangerous for f.ex. air traffic if the plant is near an airport.

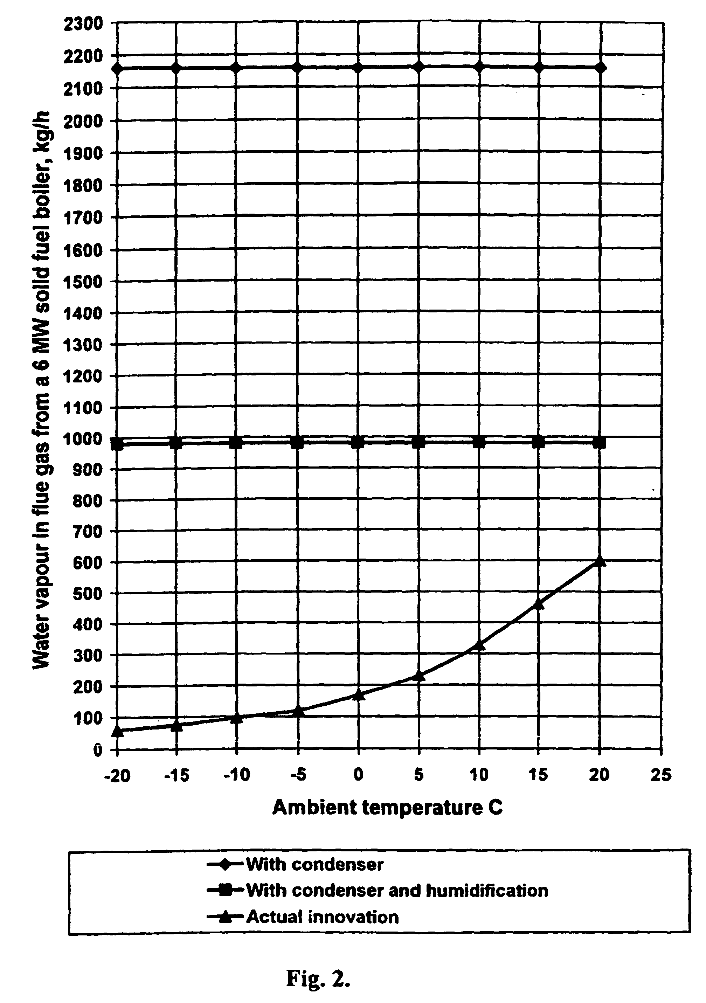

Using this innovation considerably reduces the vapour content of the flue gas. As an example the vapour content of flue gas from a 6 MW boiler fired with wood chips is shown in Fig. 2.

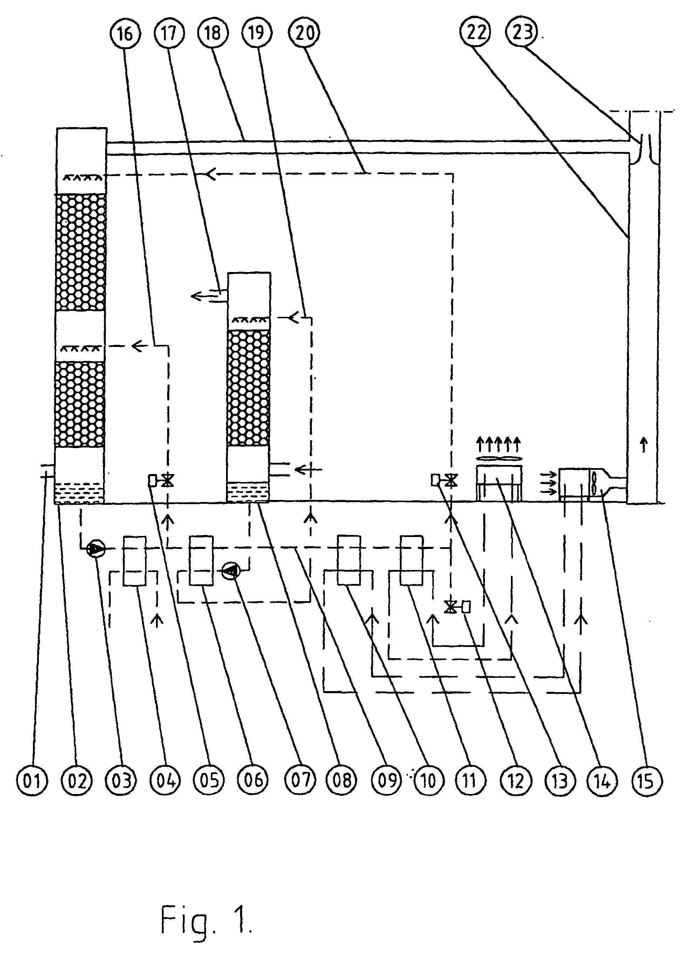

In the fig.1. it is shown as an example how the dehumidification is done in a plant where the heat recovery to the return water is used to maximum. The innovation is not only used coupled to heat recovery but can be used alone also.

A humidifier 08 of the combustion air according to known technology is included in the plant and sends humidified, warm combustion air to the boiler through the outlet (17). Humid flue gas from the boiler enters the condenser through the inlet (01). Heat is recovered into the return water in a heat exchanger (04) from a water circuit (19) where a pump (03) and a control valve (05) are installed. After the water has gone through the heat exchanger it is cooled additionally in a heat exchanger (06) with another water circuit, which humidifies the combustion air. Normally the water after passing the heat exchanger (06) would be used to cool the outgoing flue gas in a second step of the condenser. In the system according this innovation the ambient air is used to additionally cool the water to the second condenser step. One or two heat exchangers are used for the final cooling. The water is cooled either directly in an air cooler by ambient air or in a secondary circuit with freezing protection, like glycol, is used to protect the system from freezing. Two secondary circuits with a separate glycol circuit for both of them are shown in the example. The water leaving exchanger (06) through the pipe (09) is first cooled with glycol, which is chilled by ambient air in a cooler (15). A small amount of ambient air or air from the boiler room is heated in the cooler (15) and blown into the stack (22) where it is blended in an ejector with cold flue gas which has been cooled in the second condenser step. The temperature of the flue gas is now increased and its relative humidity decreased while the risk that plume is build is also decreased. The water in the pipe (09) is then cooled in the heat exchanger (11). The remaining heat is thrown away into the ambient air in an air cooler (14) and cold water goes through the pipe (20) into the top of the second step of the condenser. The valve (13) controls the flow. The flue gas is cooled in the second step of the condenser to a temperature, which is only a few degrees Centigrade higher than the water temperature is the pipe (20). The flow in the pipe (20) is controlled so that the outgoing temperature from the second step of the condenser will be the same as the water temperature in the pipe (16). The heat recovery of the system is therefore not decreased. The efficiency of the dehumidification increases by decreasing ambient temperature. The plume would normally be more pronounced when the ambient temperature decreases. This innovation decreases the plume to minimum and the dust cleaning efficiency is good in the wintertime when the boiler is run by its maximum power.

## Claims

1. A system for heat recovery and dehumidification of flue gases wherein water is injected in the flue gas, the water heated by the gas is cooled in a heat exchanger (04) which transforms part of the heat to a user of heat, the water or a part flow of the water is cooled in a second heat exchanger (10) or (11) with an air cooler (14) or (15), after which the water is injected into the already cooled flue gas for dehumidifying the flue gas, **characterised by** that the water or part of it which is injected in the flue gas is cooled in a heat exchanger (06) to transform part of the rest energy in the flue gas for humidifying the combustion air in a humidifier (08) before the water is cooled in one or both of the heat exchangers (10) and (11).

2. A system according to claim 1 **characterised by** that air is blown into the flue gas through a device (15) and that the air is first heated with the water injected to the gas by heat from the heat exchanger (10).

## Patentansprüche

1. Ein System für Wärmerückgewinnung und Entfeuchtung von Rauchgas, in dem Wasser in das Gas eingespritzt wird, das von dem Gas erwärmte Wasser wird in einem Wärmetauscher (04) gekühlt, der einen Teil der Wärme an einen Benutzer liefert, das Wasser oder ein Teil des Wassers wird in einem zweiten Wärmeaustauscher (10) oder (11) mit einem Luftkühler (14) oder (15) gekühlt, wonach das Wasser in das schon gekühlte Rauchgas zur Entfeuchtung des Gases eingespritzt wird, **dadurch gekennzeichnet dass** das in das Rauchgas eingespritzte Wasser oder in einen Teil davon in einem Wärmetauscher (06) gekühlt wird zur Überführung eines Teiles der Restwärme in dem Rauchgas zur Befeuchtung der Verbrennungsluft in einem Befeuchter (08), bevor das Wasser in einem oder beiden Wärmetauscher (10) und (11) gekühlt wird.

2. Ein System nach dem Ansprach 1 **dadurch gekennzeichnet dass** Luft in das Rauchgas durch eine Anordnung (16) eingeblasen wird und dass die Luft zuerst erwärmt wird mit dem Wasser das in das Gas eingespritzt wurde durch die Wärme des Wärmetauschers (10)

## Revendications

1. un système de recouvrement chaud et de deshumidification de tuyau de gaz en quoi l'eau est injectée dans le conduit de gaz , l'eau sera chauffée par le gaz et refroidi dans un èchangeur (04) qui transforme une partie de chaleur à chauffer encore l'eau.
chaque coulement de l'eau est refroidi dans un second échageur chaud (10) ou (11) avec de l'air froid (14) ou (15).
aprè le quel l'eau est injectée dèjà dans les tuyaux de gaz pour les deshumidifications de conduits de gaz.
**Caracterisé par** cela que l'eau ou une partie de l'eau qui sera injecté dans le tuyau de gaz est refroidie dans un échangeur chaud (06) pour transformer une paretie du reste d'energie dans le conduit de gaz pour humidifier la conbustion d,air dans l'humidificateur (08) avant que l'eau froide dans un ou deux échangeur chaud (10) et (11).

2. un système suivant la façon a reclamer 1 est **caractérisé par** que : l'air est soufflé dans le tyau de gaz à travers (15) et que l'air est premièrement chauffé avec l'eau injectée dans le gaz à chaud de l'échangeur chaud (10).
